# EUROPEAN PATENT SPECIFICATION

(11) **EP 3 354 876 B1**
(45) Date of publication and mention of the grant of the patent: **01.04.2020**
(21) Application number: 18154161.6
(22) Date of filing: 30.01.2018
(51) Int. Cl.: F02C 3/107, F02C 7/36, F02C 3/113

(54) **GAS TURBINE ENGINE ARCHITECTURE WITH SPLIT COMPRESSOR SYSTEM**
GASTURBINENMOTOR MIT ARCHITEKTUR MIT GETEILTEM KOMPRESSORSYSTEM
ARCHITECTURE DE MOTEUR DE TURBINE À GAZ COMPORTANT UN SYSTÈME À DOUBLE COMPRESSEUR

(30) Priority: 30.01.2017 US 201715419160
(43) Date of publication of application: 01.08.2018
(73) Proprietor: Pratt & Whitney Canada Corp., Longueuil, Québec J4G 1A1 (CA)
(72) Inventor: PLANTE, Ghislain, Longueuil, Québec J4G 1A1 (CA); VALOIS, Patrick, Longueuil, Québec J4G 1A1 (CA); DUBREUIL, Jean, Boucherville, Québec J4B 6X8 (CA); BLAIS, Daniel, Longueuil, Québec J4G 1A1 (CA)
(74) Representative: Dehns

(56) References cited:
- US-A- 2 929 207
- US-A- 3 488 947
- US-A1- 2015 013 307

## Description

### TECHNICAL FIELD

The application relates generally to gas turbine engines and, more particularly, to a multi-spool engine architecture having a split compressor system.

### BACKGROUND OF THE ART

Many gas turbine engine architectures with multiple stages have a low pressure compressor, high pressure compressor, high pressure turbine and low pressure turbine arranged sequentially in this order along the engine axial direction. The low pressure compressor at a first end of the engine is drivingly connected to the low pressure turbine at the opposed end of the engine via a low pressure shaft extending concentrically through a hollow high pressure shaft, which, in turn, drivingly connects the high pressure turbine to the high pressure compressor.

For reasons, such as maintainability and reparability, it is generally desirable to have an engine architecture that allows for simple engine disassembly. However, in some instances, concentric shaft arrangements such as the one described above may complicate the engine disassembly procedures.

There is, thus, a need for improvement.

US 2929207 A discloses a prior art gas turbine engine according to the preamble of claim 1.

### SUMMARY

In one aspect, there is provided a gas turbine engine as set forth in claim 1.

In an embodiment according to the previous embodiment, the external shaft is parallel to the high pressure shaft.

In another embodiment according to any of the previous embodiments, a geared connection is provided between the external shaft and at least one of the low pressure compressor and the low pressure turbine to allow the low pressure compressor to be driven at a different speed from that of the low pressure turbine.

In another embodiment according to any of the previous embodiments, a gear set is operatively connected to the external shaft and configured for inverting a rotational direction of the low pressure compressor relative to the low pressure turbine.

In another embodiment according to any of the previous embodiments, the external shaft is operatively connected to a mechanical link configured to cause a rotational direction of the low pressure compressor to be opposite to that of the low pressure turbine.

In another embodiment according to any of the previous embodiments, the external shaft has an input end connected to a downstream side of the low pressure turbine relative to a flow of gas through the core gaspath.

In another embodiment according to any of the previous embodiments, the external shaft has an output end connected to an upstream side of the low pressure compressor relative to a flow of gas through the core gaspath.

In another embodiment according to any of the previous embodiments, the low pressure compressor is located at a rear end portion of the engine whereas the low pressure turbine is located at a front end portion of the engine, a gas flowing through the core gaspath from the rear end portion to the front end portion of the engine.

In another embodiment according to any of the previous embodiments, the external shaft has an input end connected to an upstream side of the low pressure turbine and an output end connected to a downstream side of the low pressure compressor relative to a flow of gas through the core gaspath.

In another embodiment according to any of the previous embodiments, the engine further comprises an accessory gearbox (AGB), and the low pressure turbine is drivingly connected to the AGB via the external shaft.

In another embodiment according to any of the previous embodiments, the high pressure turbine is also drivingly connected to the AGB, the AGB having first and second power inputs respectively provided by the low and high pressure turbines.

In another embodiment according to any of the previous embodiments, the external shaft extends axially from a location upstream of the high pressure compressor to a location downstream of the high pressure turbine.

In another embodiment according to any of the previous embodiments, the high pressure shaft and the high pressure compressor form a high pressure spool, and the external shaft axially spans the high pressure spool.

In another embodiment according to any of the previous embodiments, the low pressure turbine comprises a low pressure shaft drivingly connected to a reduction gearbox (RGB) or to a load external to the engine.

In another embodiment according to any of the previous embodiments, the engine further comprises a propeller drivingly connected to an output end of the RGB.

### DESCRIPTION OF THE DRAWINGS

Reference is now made to the accompanying figures in which:
Fig. 1 is a schematic cross-sectional view of a reverse flow gas turbine engine including an external low pressure (LP) compressor shaft and an accessory gearbox (AGB) coaxial to the engine centerline in accordance to an embodiment of the present disclosure;
Fig. 2 is a schematic cross-sectional view of the reverse flow gas turbine engine shown in Fig. 1 but illustrating an alternative positioning of the AGB;
Fig. 3 is a schematic cross-sectional view of the reverse flow gas turbine engine and illustrating a drive input from the external LP compressor shaft to an AGB coaxial to the engine centerline;
Fig. 4 is a schematic cross-sectional view of the reverse flow gas turbine engine and illustrating a drive input from the external LP shaft to a side-mounted AGB; and
Fig. 5 is a schematic cross-section view of a through flow engine with an external LP compressor shaft in accordance with a further embodiment of the present disclosure.

### DETAILED DESCRIPTION

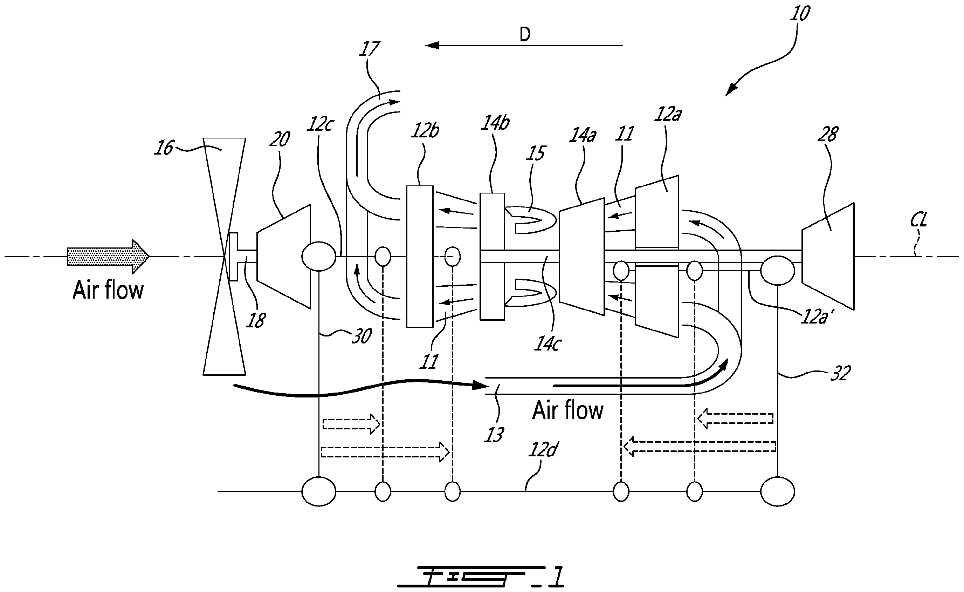

Fig. 1 illustrates a first example of a multi-spool gas turbine engine 10 of a type preferably provided for use in subsonic flight, and generally comprising an engine core having a turbomachinery with multiple spools which perform compression to pressurize atmospheric air received through an air inlet 13, and which extract energy from combustion gases before they exit the engine via an exhaust outlet 17. The engine core further comprises a core gaspath 11 to direct gases from the air inlet 13 to the exhaust outlet 17, as depicted by the flow arrows in Fig. 1. The core gaspath 11 may be annular and concentric relative to the engine centerline CL.

The term "spool" is herein intended to broadly refer to drivingly connected turbine and compressor rotors and is, thus, not limited to a compressor and turbine assembly on a single shaft. As will be seen hereinafter, it also includes a rotary assembly with multiple shafts geared together.

In the embodiment shown in Fig. 1, the engine core includes a low pressure (LP) spool and a high pressure (HP) spool. The LP spool generally comprises an LP compressor 12a for pressurizing air received from the air inlet 13 and an LP turbine 12b for extracting energy from combustion gases discharged from a combustor 15 in which compressed air is mixed with fuel and ignited for generating an annular stream of hot combustion gases. The LP turbine 12b is connected mechanically to the LP compressor 12a. Flow communication between the two LP compressor 12a and the low pressure turbine 12b is through the high pressure spool and the combustor 15 via the core gaspath 11. The LP compressor 12a and the LP turbine 12b are coaxially mounted for rotation about a common axis, which corresponds to the engine centerline CL.

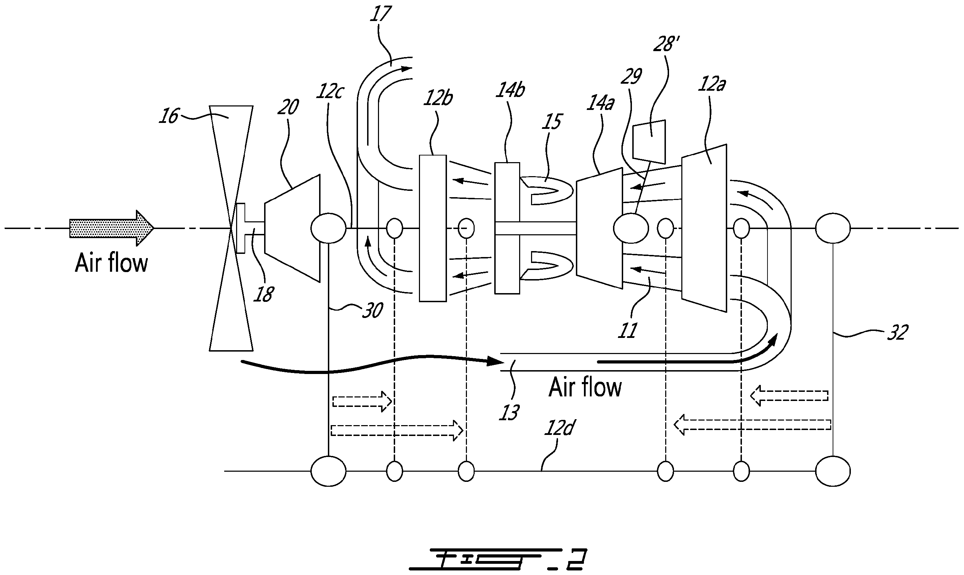

The HP spool generally comprises an HP compressor 14a connected in flow communication with the LP compressor 12a for receiving pressurized air therefrom via the core gaspath 11. The HP spool further comprises an HP turbine 14b immediately downstream of the combustor 15. The HP turbine 14b is drivingly connected to the HP compressor 14a via an HP shaft 14c. The HP shaft 14c is coaxial to the engine centerline CL. In the illustrated embodiment, the LP compressor 12a, the LP turbine 12b, the HP turbine 14b and the HP compressor 14a are all mounted for rotation about the engine centerline CL. The HP spool may be drivingly connected to an accessory gearbox (AGB) 28 coaxially mounted at the rear end of the engine 10 for providing drive outputs to various accessories (e.g. fuel pump, starter-generator, oil pump, scavenge pump, etc.). For instance, the HP shaft 14c may be extended axially beyond the HP compressor 14a through a central bore of the LP compressor 12a to provide a drive input to the AGB 28. Alternatively, as shown in Fig. 2, the AGB 28' may be side mounted and drivingly connected to the HP pressure spool via a tower shaft 29.

The LP turbine 12b is also known as the power turbine. The LP turbine 12b may drive two or more rotatable loads. According to the illustrated embodiment, the first load is a propeller 16, which provides thrust for flight and taxiing in aircraft applications. However, it is understood that the first load could be any suitable component, or any combination of suitable components, that is capable of receiving a rotational drive from the LP turbine 12b. For instance, in an alternate embodiment where the engine 10 is a turboshaft instead of a turboprop as depicted in Fig. 1, the first load could include helicopter main rotor(s) and/or tail rotor(s), pump(s), generator(s), gas compressor(s), marine propeller(s), etc.

In the embodiment shown in Fig. 1, the first load (i.e. the propeller 16) is drivingly coupled to an output shaft 18 extending axially from an output end of a reduction gearbox (RGB) 20. The input end of the RGB 20 is mechanically coupled to an LP turbine shaft 12c drivingly connected to the LP turbine 12b. As shown in Fig. 1, the LP turbine shaft 12c and the output shaft 18 may be coaxial to the engine centerline CL. The RGB 20 processes and outputs the rotational drive transferred thereto from the LP turbine 12b via the LP turbine shaft 12c through known gear reduction techniques. The RGB 20 allows for the propeller 16 to be driven at a rotational speed, which is different from the rotational speed of the LP turbine 12b, thereby providing for better efficiency.

Still referring to Fig. 1, the second load driven by the LP turbine 12b is the LP compressor 12a. According to one aspect of the illustrated embodiment, the LP compressor 12a is drivingly connected to the LP turbine 12b via an LP compressor drive shaft 12d. It can be appreciated from Fig. 1 that the LP compressor drive shaft 12d is an external shaft. In the illustrated embodiment, the LP compressor drive shaft 12d is disposed radially outwardly of the engine core and, more particularly, radially outwardly of an outer circumference of the core gaspath 11. As illustrated, the external shaft 12d can be parallel to the HP shaft 14c but radially offset with respect thereto. In the illustrated embodiment, the LP compressor drive shaft 12d axially spans the HP spool (the HP turbine 14b, the HP compressor 14a and the HP pressure shaft 14c) and is connected at an input end to the LP turbine shaft 12c by a first mechanical link 30 and at an output end thereof to the LP compressor 12a via a second mechanical link 32. As schematically depicted in dotted lines in Fig. 1, the first and second mechanical links 30, 32 could be provided at various axially spaced-apart locations relative to the LP turbine 12b and the LP compressor 12a. For instance, the first mechanical link 30 is shown next to the RGB 20 downstream of the LP turbine 12b relative to the gas flowing through the core gaspath 11. The second mechanical link 32 is shown adjacent to the AGB 28 on an upstream side of the LP compressor 12a. The LP compressor 12a could be provided with a shaft extension 12a' projecting axially from the upstream side of the LP compressor rotor for connection with the mechanical link 32. Alternatively, the first and second mechanical links 30, 32 could be respectively located closer to the LP turbine 12b and the LP compressor 12a and even be located on an upstream side of the LP turbine 12b and the downstream side of the LP compressor 12a, respectively. These alternative mechanical locations could be used to reduce the length of the LP compressor drive shaft 12d or to accommodate different mechanical constraints.

The mechanical links 30, 32 may be provided in the form of gear sets, thereby allowing changing the mechanical speed between each segment. The LP turbine and the LP compressor could, thus, have different speeds to optimize performance or accommodate mechanical constraints. Also, the gears could be configured so that the LP compressor rotational direction (clockwise or counter-clockwise) is opposite to that of the HP compressor 14a. On another version, the configuration could have the LP turbine rotating in the opposite direction of the HP turbine. This could allow reducing the flow turning losses in transition between the turbomachinery components.

Each mechanical link could further comprise a tower shaft or the like to allow positioning of the external LP compressor shaft 12d further away from the engine centerline CL. Also, it is understood that any suitable type of mechanical link adapted to transfer a torque from the LP turbine to the LP compressor could be used (i.e. the mechanical links are not limited to gear sets and the like).

By positioning the LP compressor drive shaft 12d outside of the engine core, the disconnection of the LP compressor drive shaft is facilitated when it is desired or required to perform engine inspection or maintenance operations on the hot engine section of the engine. With the external LP compressor shaft, one could simply disconnect the shaft from one of its mechanical links 30, 32 and split the engine through a plane between the LP turbine 12b and the HP turbine 14b like the well-known PT6 engines manufactured by Pratt & Whitney Canada. The proposed external shaft architecture allows to preserve the ability of splitting the engine in the turbine section while accommodating a compressor boost in a compact axially in-line turbomachinery arrangement. Further embodiments illustrated in figures 2, 4 and 5 would also allow to split the engine between LP compressor 12a and HP compressor 14a.

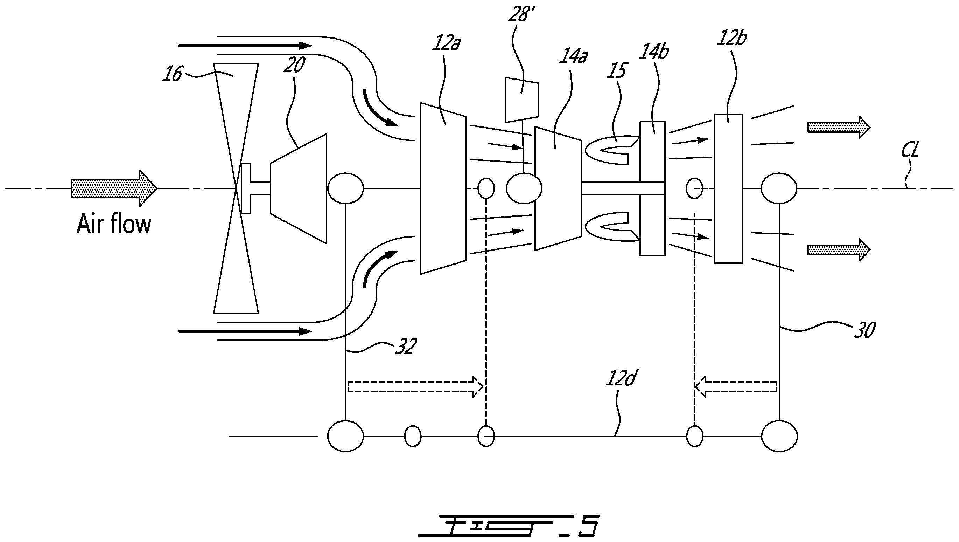

The engine 10 shown in Figs. 1 and 2 is a "reverse-flow" engine 10 because gases flow through the core gaspath 11 from the air inlet 13 at a rear portion of the engine, to the exhaust outlet 17 at a front portion thereof. This is in contrast to a "through-flow" gas turbine engine (Fig. 5) in which gases flow through the core gaspath of the engine from a front portion to a rear portion. The direction of the flow of gases through the core gaspath 11 of the engine 10 disclosed herein can be better appreciated by considering that the gases flow through the core gaspath 11 in the same direction D as the one along which the engine 10 travels during flight. Stated differently, gases flow through the engine 10 from a rear end thereof towards the propeller 16.

It will thus be appreciated that the expressions "forward" and "aft" used herein refer to the relative disposition of components of the engine 10, in correspondence to the "forward" and "aft" directions of the engine 10 and aircraft including the engine 10 as defined with respect to the direction of travel. In the embodiment shown, a component of the engine 10 that is "forward" of another component is arranged within the engine 10 such that it is located closer to the propeller 16. Similarly, a component of the engine 10 that is "aft" of another component is arranged within the engine 10 such that it is further away from the propeller 16.

In view of the foregoing, it can also be appreciated that the LP compressor 12a is disposed aft of the LP turbine 12b. Likewise, the HP compressor 14a is disposed aft of the HP turbine 14b. The LP and HP turbines 12b, 14b are disposed immediately adjacent to one another with no concentric HP and LP shafts extending therebetween. The use of an external LP compressor drive shaft 12d eliminates the need for a concentric shaft arrangement to interconnect LP spool components disposed on axially opposite ends of the HP spool. This allows for the provision of an engine split plane between the LP and HP turbines 12b, 14b. Such a modular approach facilitates engine disassembly and, thus, access to the engine internal components for inspection purposes and the like.

In operation, the LP compressor 12a pressurizes the air received from air inlet 13. The air is then directed from the LP compressor 12a to the HP compressor 14a via the core gaspath 11, which is annular in the illustrated embodiment. The HP compressor 14a further pressurized the air before the compressed air is mixed with fuel and ignited in the combustor 15. The combustion gases discharged from the combustor 15 flow through the various stages of the HP turbine 14b where energy is extracted to drive the HP compressor 14a and the AGB 28. The combustion gases flow through the core gaspath from the HP turbine 14b to the LP turbine 12b where further energy is extracted from the combustion gases by the LP turbine 12b to drive the LP compressor 12a and the RGB 10 and the propeller 16. The combustion gases are then discharged from the engine 10 via exhaust 17.

It can be appreciated that during operation of the engine 10, the LP compressor 12a driven by the LP turbine 12b feeds pressurized air to the HP compressor 14a. Therefore, the pressurized air flow produced by the LP compressor 12a is provided to the HP compressor 14a and contributes to the work of both the LP turbine 12b and the HP turbine 14b.

It can thus be appreciated that the presence of the above-described LP and HP spools provides the engine 10 with a "split compressor" arrangement. More particularly, some of the work required to compress the incoming air is transferred from the HP compressor 14a to the LP compressor 12a. In other words, some of the compression work is transferred from the HP turbine 14b to the LP turbine 12b. This transfer of work may contribute to higher pressure ratios while maintaining a relatively small number of rotors. In a particular embodiment, higher pressure ratios allow for higher power to weight ratio, better engine specific fuel consumption (SFC), and a lower combustor exit temperature (sometimes referred to as "T4") for a given power. These factors can contribute to a lower overall weight for the engine 10. The transfer of compression work from the HP compressor 14a to the LP compressor 12a contrasts with some conventional reverse-flow engines, in which the high pressure compressor (and thus the high pressure turbine) perform all of the compression work.

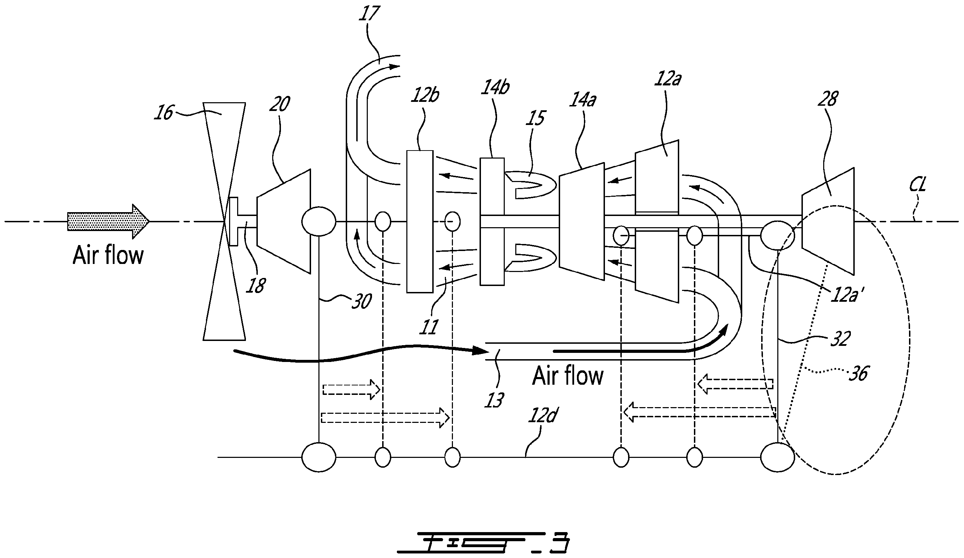

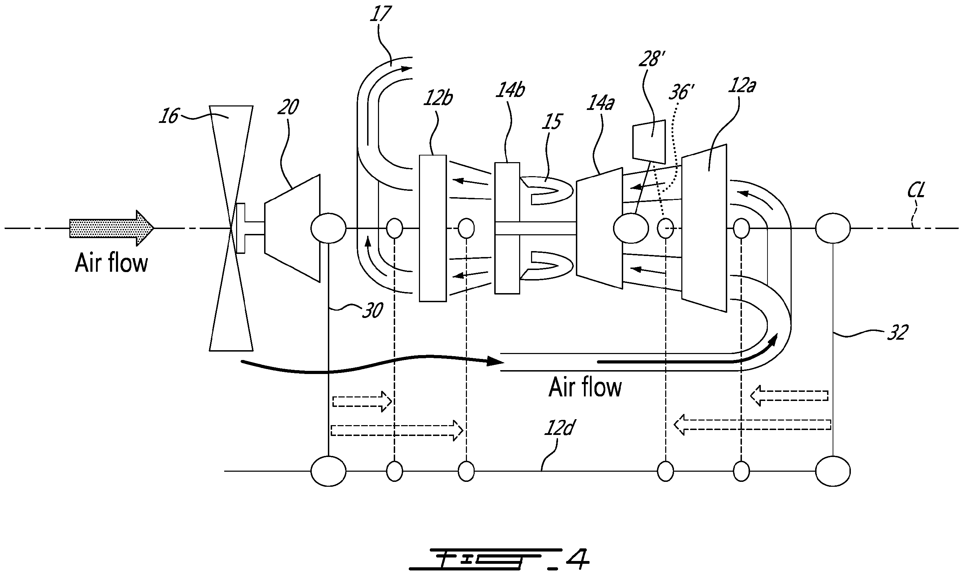

Referring now to Figs. 3 and 4, it can be seen that the LP turbine 12b may be drivingly connected to the AGB 28, 28' via the external LP compressor shaft 12d. An additional mechanical link 36, 36' may be provided between an output end of the LP compressor drive shaft 12d and a secondary input of the AGB 28, 28'. In this way, two inputs could be provided to the AGB, one from the HP spool and one from the LP spool. This would allow running some accessories, such as a pump and/or a generator, with the higher efficiency low pressure spool instead of the high pressure spool, resulting in performance gains. In the embodiment of Fig. 4 with the side mounted AGB 28', the external LP shaft 12d is drivingly connected to the LP compressor 12a via link 32 and the LP compressor is, in turn, drivingly connected to the AGB 28' via link 36'

Fig. 5 illustrates a variant of the engine in which the engine has a through flow configuration (i.e. the gas flow through the core gaspath from a front end of the engine to a rear end thereof). Fig. 5 illustrates that an external or outside LP compressor drive shaft arrangement can be used to allow the engine to have split planes (i.e. a shaft discontinuity) between the LP turbine and the HP turbine, and between the LP compressor 12a and HP compressor 14a, with a through flow engine configuration.

It can thus be appreciated that at least some of the embodiments of the engine disclosed herein provide a mechanical architecture of turbomachinery that allows for a split compressor system and easy disassembly of the engine between the LP turbine and the HP turbine. Such a split compressor engine arrangement with an externally disposed LP compressor shaft may be used for aircraft nose installations, as well as for wing installations. It can also be used for industrial applications. This engine architecture also allows for a geared LP compressor which is advantageous from an aerodynamic point of view. Performance gains might also result from a leaner mechanical arrangement, i.e. less parasitic losses associated to support bearings and transfer gears.

The above description is meant to be exemplary only, and one skilled in the art will recognize that changes may be made to the embodiments described without departing from the scope of the present disclosure. Any modifications which fall within the scope of the present invention will be apparent to those skilled in the art, in light of a review of this disclosure, and such modifications are intended to fall within the appended claims.

## Claims

1. A gas turbine engine (10) comprising:
an engine core including a low pressure compressor (12a), a high pressure compressor (14a), a high pressure turbine (14b) and a low pressure turbine (12b) fluidly connected in series by an annular core gaspath (11) concentric to an engine axis (CL), the low pressure compressor (12a) and the low pressure turbine (12b) being coaxially mounted for rotation about the engine axis (CL); and
an external shaft (12d) disposed radially outwardly of an outer circumference of the core gaspath (11) and drivingly connecting the low pressure turbine (12b) to the low pressure compressor (12a),
**characterised in that**:
the high pressure turbine (14b) is drivingly connected to the high pressure compressor (14a) via a high pressure shaft (14c), the high pressure shaft (14c) being spaced radially inwardly from the core gaspath (11); and
the high pressure shaft (14c) is coaxial to the engine axis (CL), and the external shaft (12d) connecting the low pressure turbine (12b) to the low pressure compressor (12a) is radially offset from the high pressure shaft (14c).

2. The gas turbine engine (10) according to claim 1, wherein the external shaft (12d) is parallel to the high pressure shaft (14c).

3. The gas turbine engine (10) defined in claim 1 or 2, wherein a geared connection (30, 32) is provided between the external shaft (12d) and at least one of the low pressure compressor (12a) and the low pressure turbine (12b) to allow the low pressure compressor (12a) to be driven at a different speed from that of the low pressure turbine (12b).

4. The gas turbine engine (10) defined in any preceding claim, wherein the external shaft (12d) is operatively connected to a mechanical link (30, 32) configured to cause a rotational direction of the low pressure compressor (12a) to be opposite to that of the low pressure turbine (12b).

5. The gas turbine engine (10) defined in any preceding claim, wherein the external shaft (12d) has an input end connected to a downstream side of the low pressure turbine (12b) relative to a flow of gas through the core gaspath (11), and the external shaft (12d) has an output end connected to an upstream side of the low pressure compressor (12a) relative to the flow of gas through the core gaspath (11).

6. The gas turbine engine (10) defined in claim 5, wherein the low pressure compressor (12a) is located at a rear end portion of the engine (10), the low pressure turbine (12b) is located at a front end portion of the engine (10), and gas flows through the core gaspath (11) from the rear end portion to the front end portion of the engine (10).

7. The gas turbine engine (10) defined in any preceding claim, further comprising an accessory gearbox (AGB) (28, 28'), wherein the low pressure turbine (12b) is drivingly connected to the AGB (28, 28') via the external shaft (12d).

8. The gas turbine engine (10) defined in claim 7, wherein the high pressure turbine (14b) is also drivingly connected to the AGB (28, 28'), the AGB having first and second power inputs respectively provided by the low and high pressure turbines (12b, 14b).

9. The gas turbine engine (10) defined in any preceding claim, wherein the external shaft (12d) extends axially from a location upstream of the high pressure compressor (14a) to a location downstream of the high pressure turbine (14b).

10. The gas turbine engine (10) defined in any preceding claim, wherein the high pressure turbine (14b), the high pressure shaft (14c) and the high pressure compressor (14a) form a high pressure spool, and the external shaft (12d) axially spans the high pressure spool.

11. The gas turbine engine (10) defined in any preceding claim, wherein the low pressure turbine (12b) comprises a low pressure shaft (12c) drivingly connected to a reduction gearbox (RGB) (20) or to a load (16) external to the engine (10).

12. The gas turbine engine (10) defined in claim 11, further comprising a propeller (16) drivingly connected to an output end of the RGB (20).

## Patentansprüche

1. Gasturbinentriebwerk (10), umfassend:
einen Triebwerkskern, der einen Niederdruckkompressor (12a), einen Hochdruckkompressor (14a), eine Hochdruckturbine (14b) und eine Niederdruckturbine (12b) beinhaltet, die durch einen ringförmigen Kerngaspfad (11) konzentrisch zu einer Triebwerksachse (CL) fluidisch in Reihe verbunden sind, wobei der Niederdruckkompressor (12a) und die Niederdruckturbine (12b) zur Drehung um die Triebwerksachse (CL) koaxial montiert sind; und
eine externe Welle (12d), die radial außerhalb eines Außenumfangs der Kerngaspfads (11) angeordnet ist und die Niederdruckturbine (12b) mit dem Niederdruckkompressor (12a) antriebsmäßig verbindet,
**dadurch gekennzeichnet, dass**:
die Hochdruckturbine (14b) mit den Hochdruckkompressor (14a) über eine Hochdruckwelle (14c) antriebsmäßig verbunden ist, wobei die Hochdruckwelle (14c) von dem Kerngaspfad (11) radial nach innen beabstandet ist; und
die Hochdruckwelle (14c) koaxial zur Triebwerksachse (CL) ist und die externe Welle (12d), welche die Niederdruckturbine (12b) mit dem Niederdruckkompressor (12a) verbindet, von der Hochdruckwelle (14c) radial versetzt ist.

2. Gasturbinentriebwerk (10) nach Anspruch 1, wobei die externe Welle (12d) parallel zu der Hochdruckwelle (14c) ist.

3. Gasturbinentriebwerk (10) nach Anspruch 1 oder 2, wobei eine Getriebeverbindung (30, 32) zwischen der externen Welle (12d) und mindestens einem von dem Niederdruckkompressor (12a) und der Niederdruckturbine (12b) bereitgestellt ist, um zu ermöglichen, dass der Niederdruckkompressor (12a) mit einer anderen Geschwindigkeit angetrieben wird als die Niederdruckturbine (12b).

4. Gasturbinentriebwerk (10) nach einem der vorstehenden Ansprüche, wobei die externe Welle (12d) mit einer mechanischen Verbindung (30, 32) wirkverbunden ist, welche dazu konfiguriert ist, zu verursachen, dass eine Drehrichtung des Niederdruckkompressors (12a) entgegengesetzt zu der der Niederdruckturbine (12b) ist.

5. Gasturbinentriebwerk (10) nach einem der vorstehenden Ansprüche, wobei die externe Welle (12d) ein Eingangsende aufweist, das mit einer in Bezug auf einen Gasstrom durch den Kerngaspfad (11) stromabwärtigen Seite der Niederdruckturbine (12b) verbunden ist, und wobei die externe Welle (12d) ein Ausgangsende aufweist, das mit einer in Bezug auf den Gasstrom durch den Kerngaspfad (11) stromaufwärtigen Seite der Niederdruckturbine (12b) verbunden ist.

6. Gasturbinentriebwerk (10) nach Anspruch 5, wobei sich der Niederdruckkompressor (12a) an einem hinteren Endabschnitt des Triebwerks (10) befindet, wobei sich die Niederdruckturbine (12b) an einem vorderen Endabschnitt des Triebwerks (10) befindet, und wobei Gas durch den Kerngaspfad (11) von dem hinteren Endabschnitt zu dem vorderen Endabschnitt des Triebwerks (10) strömt.

7. Gasturbinentriebwerk (10) nach einem der vorstehenden Ansprüche, ferner umfassend ein Getriebe für Nebenverbraucher (accessory gearbox - AGB) (28, 28'), wobei die Niederdruckturbine (12b) über die externe Welle (12d) mit dem AGB (28, 28') antriebsmäßig verbunden ist.

8. Gasturbinentriebwerk (10) nach Anspruch 7, wobei die Hochdruckturbine (14b) auch antriebsmäßig mit dem AGB verbunden ist, wobei das AGB einen ersten bzw. zweiten Leistungseingang aufweist, welche durch die Nieder- und Hochdruckturbine (12b, 14b) bereitgestellt werden.

9. Gasturbinentriebwerk (10) nach einem der vorstehenden Ansprüche, wobei sich die externe Welle (12d) axial von einer Stelle stromaufwärts des Hochdruckkompressors (14a) zu einer Stelle stromabwärts der Hochdruckturbine (14b) erstreckt.

10. Gasturbinentriebwerk (10) nach einem der vorstehenden Ansprüche, wobei die Hochdruckturbine (14b), die Hochdruckwelle (14c) und der Hochdruckkompressor (14a) eine Hochdruckspule bilden, und wobei die externe Welle (12d) die Hochdruckspule axial überspannt.

11. Gasturbinentriebwerk (10) nach einem der vorstehenden Ansprüche, wobei die Niederdruckturbine (12b) eine Niederdruckwelle (12c) umfasst, welche mit einem Reduktionsgetriebe (reduction gear box - RGB) (20) oder einem Verbraucher (16) außerhalb des Triebwerks (10) antriebsmäßig verbunden ist.

12. Gasturbinentriebwerk (10) nach Anspruch 11, ferner umfassend einen Propeller (16), der mit einem Ausgangsende des RGB (20) antriebsmäßig verbunden ist.

## Revendications

1. Moteur à turbine à gaz (10) comprenant :
un noyau central comportant un compresseur basse pression (12a), un compresseur haute pression (14a), une turbine haute pression (14b) et une turbine basse pression (12b) reliés fluidiquement en série par un trajet de gaz de noyau annulaire (11) concentrique à un axe de moteur (CL), le compresseur basse pression (12a) et la turbine basse pression (12b) étant montés coaxialement pour tourner autour de l'axe de moteur (CL) ; et
un arbre externe (12d) disposé radialement vers l'extérieur d'une circonférence extérieure du trajet de gaz de noyau (11) et reliant par entraînement la turbine basse pression (12b) au compresseur basse pression (12a),
**caractérisé en ce que** :
la turbine haute pression (14b) est reliée par entraînement au compresseur haute pression (14a) par l'intermédiaire d'un arbre haute pression (14c), l'arbre haute pression (14c) étant espacé radialement vers l'intérieur du trajet de gaz de noyau (11) ; et
l'arbre haute pression (14c) est coaxial à l'axe de moteur (CL), et l'arbre externe (12d) reliant la turbine basse pression (12b) au compresseur basse pression (12a) est radialement décalé par rapport à l'arbre haute pression (14c).

2. Moteur à turbine à gaz (10) selon la revendication 1, dans lequel l' arbre externe (12d) est parallèle à l' arbre haute pression (14c) .

3. Moteur à turbine à gaz (10) selon la revendication 1 ou 2, dans lequel une liaison à engrenages (30, 32) est prévue entre l'arbre externe (12d) et au moins l'un du compresseur basse pression (12a) et de la turbine basse pression (12b) pour permettre au compresseur basse pression (12a) d'être entraîné à une vitesse différente de celle de la turbine basse pression (12b).

4. Moteur à turbine à gaz (10) défini selon une quelconque revendication précédente, dans lequel l'arbre externe (12d) est relié de manière opérationnelle à une liaison mécanique (30, 32) configurée pour provoquer un sens de rotation du compresseur basse pression (12a) opposé à celui de la turbine basse pression (12b).

5. Moteur à turbine à gaz (10) défini selon une quelconque revendication précédente, dans lequel l'arbre externe (12d) a une extrémité d'entrée reliée à un côté aval de la turbine basse pression (12b) par rapport à un écoulement de gaz à travers le trajet de gaz de noyau (11) et l'arbre externe (12d) a une extrémité de sortie reliée à un côté amont du compresseur basse pression (12a) par rapport à l'écoulement de gaz à travers le trajet de gaz de noyau (11).

6. Moteur à turbine à gaz (10) défini selon la revendication 5, dans lequel le compresseur basse pression (12a) est situé sur une partie d'extrémité arrière du moteur (10), la turbine basse pression (12b) est située sur une partie d'extrémité avant du moteur (10), et le gaz s'écoule à travers le trajet de gaz de noyau (11) de la partie d' extrémité arrière à la partie d'extrémité avant du moteur (10).

7. Moteur à turbine à gaz (10) défini selon une quelconque revendication précédente, comprenant en outre un boîtier d'accessoires (AGB) (28, 28'), dans lequel la turbine basse pression (12b) est reliée par entraînement à l'AGB (28, 28') par l'intermédiaire de l'arbre externe (12d).

8. Moteur à turbine à gaz (10) défini selon la revendication 7, dans lequel la turbine haute pression (14b) est également reliée par entraînement à l'AGB (28, 28'), l'AGB ayant des première et seconde entrées de puissance fournies respectivement par les turbines basse et haute pression (12b, 14b).

9. Moteur à turbine à gaz (10) défini selon une quelconque revendication précédente, dans lequel l'arbre externe (12d) s'étend axialement depuis un emplacement en amont du compresseur haute pression (14a) à un emplacement en aval de la turbine haute pression (14b).

10. Moteur à turbine à gaz (10) défini selon une quelconque revendication précédente, dans lequel la turbine haute pression (14b), l'arbre haute pression (14c) et le compresseur haute pression (14a) forment une bobine haute pression et l' arbre externe (12d) traverse axialement la bobine haute pression.

11. Moteur à turbine à gaz (10) défini selon une quelconque revendication précédente, dans lequel la turbine basse pression (12b) comprend un arbre basse pression (12c) relié par entraînement à un réducteur (RGB) (20) ou à une charge (16) externe au moteur (10) .

12. Moteur à turbine à gaz (10) défini selon la revendication 11, comprenant en outre une hélice (16) reliée par entraînement à une extrémité de sortie du RGB (20).
